# EUROPEAN PATENT SPECIFICATION

(11) **EP 1 727 709 B1**
(45) Date of publication and mention of the grant of the patent: **23.06.2010**
(21) Application number: 04806273.1
(22) Date of filing: 14.12.2004
(51) Int. Cl.: B60R 7/10

(54) **CLOTHES HANGING DEVICE FOR TRANSPORTING CLOTHES IN A PASSENGER VEHICLE**
VORRICHTUNG ZUM AUFHÄNGEN VON KLEIDUNGSSTÜCKEN ZUM TRANSPORT VON KLEIDUNGSSTÜCKEN IN EINEM PKW
DISPOSITIF DE SUSPENSION DE VETEMENT POUR TRANSPORTER DES VETEMENTS DANS UN VEHICULE TRANSPORTANT DES PASSAGERS

(30) Priority: 22.12.2003 HU 0300317 U
(43) Date of publication of application: 06.12.2006
(73) Proprietor: Vácity, Jozsef, 6500 Baja (HU)
(72) Inventor: Vácity, Jozsef, 6500 Baja (HU)
(74) Representative: Kormos, Ágnes
(86) International application number: PCT/HU2004/000116
(87) International publication number: WO 2005/061275

(56) References cited:
- WO-A-93/25411
- US-B1- 6 260 750
- PATENT ABSTRACTS OF JAPAN vol. 018, no. 176 (C-1183), 25 March 1994 (1994-03-25) & JP 05 337024 A (KAZUMORI KAMIMURA), 21 December 1993 (1993-12-21)

## Description

The subject of this invention is a clothes hanging device for transporting clothes in a passenger vehicle, which may be placed behind the back rest of the front seat so that it does not block the driver's view. The clothes hanging device consists of a clothes hanger body, mounted in removable fashion onto the back rest of the seat or head rest supports using a clothes hanger supporting rod and matching fitting, so that the rod may be removed with a single motion and passengers may be transported in the back seat without danger. The fitting is always located below the vertical plane of the head rest, so as to prevent it from becoming the cause of an accident, even in the event of a collision.

It is well known that in the interior of a motor vehicle, certain articles of clothing, such as jackets, coats, etc., are placed on a regular clothes hanger and hung on special hook located above or directly protruding from the overhead safety grips, in order to prevent them from becoming wrinkled. When the vehicle moves, brakes, or accelerates, these articles of clothing generally fall onto the seat or the floor, where they become wrinkled nonetheless. If, on the other hand, a jacket is hung on the same hook by means of the loop sewn at the nape of the neck, then this will also cause wrinkling.

The Japanese JP 05337024 publication number patent abstract show a similar arrangement, wherein a hanger device is constituted of filling base sections having insertion holes capable of being coupled with a pair of support bars of the headrest of an automobile seat, support pillars extended upward from the fitting base sections and a clothes hanger connected to the upper ends of the support pillars, and a clothes hanger can be erected at the rear of the seat via such simple work that the headrest is extracted from the seat, insection holes of the fitting base sections are coupled with the support bars of the headrest, then the headrest is fitted as before

Prior art is described also, by US 6,260,750 B1 patent specification.
This invention consists of a suit hanger is adapted for use in an interior of a car, which is provided with a seat member and a headrest member that has a pair of downwardly extending vertical mounting rods for mounting on top of the seat member. The suit hanger includes a main body and a pair of connecting members. The main body has an upwardly curving upper bar with two opposite ends a pair of lower bars disposed below the upper bar, and a pair of vertical bars. Each of the lower bars has an outer end connected to a respective one of the opposite ends of the upper bar, and an inner end that extends from the outer end in a direction toward the other one of the lower bars. Each of the vertical bars has an upper end portion connected to the inner end of a respective one of the lower bars, and a lower end portion.

The disadvantage of both solution is that the device can be used only by extracting the headrest from the seat, because the insertion holes of the fitting base sections are coupled with the support bars of the headrest.
The International Publication Number WO 93/25411 illustrates a garment hanger for attachment to a vehicle seat having one or more pillars extending upwardly from the seat back to carry a head restraint, the garment hanger comprising a garment supporting structure adapted to support the shoulder and collar portions of a garment, and a mounting structure adapted to be attached to the vehicle seat by engagement with the pillar or pillars extending from the upper surface of the vehicle seat back and connecting the vehicle seat to a headrest mounted above the back of the vehicle seat, the mounting structure being capable of supporting the garment supporting structure adjacent the upper end of the seat back portion without engaging the front surface of the seat.

The disadvantage of the solution is that the garment hanger can be connected to the seat by a complicated and expensive bearing pad and yoke, which can be mounted only by removing the headrest supporting pillars . After removing the garment hanger the bearing pad and yoke will be still there being a source of a casualty or accident for the passenger sitting in the rear seat.

The invention serves to transport relatively large quantities of clothing inside motor vehicles, particularly for merchants, using a structure that is complicated, expensive, and functionally unsuited to the transportation by private individuals of one or two articles of clothing in their own vehicles.

In creating the present invention, my objective was to devise a clothes hanging device that may be used in a motor vehicle, which may be placed in simple fashion behind the back rest of the front seat, so that it does not block the driver's field of vision. In the event passengers are also transported in the vehicle, the clothes hanger supporting rod and clothes hanger body may be removed at any time, easily, with a single motion, and since the fitting into which the lower end of the clothes hanger supporting rod is inserted is located below the vertical plane of the head rest, when the clothes hanger supporting rod and clothes hanger body are removed, the remaining fitting will not become the cause of an accident, even in the case of a collision. The device does not interfere with door function, is easy to use, and is safe with respect to both the driver of the vehicle and any passengers in the back seats.

The invention stems from the recognition that if we place a clothes hanging device used for carrying and transporting clothes behind the back rest of the front seat of the motor vehicle, then on the one hand, the hanger and on it the clothes will not disturb the driver of the motor vehicle in the least, nor block his/her field of vision to the sides and rear, while on the other hand, if the clothes hanger body is connected to a fitting, in removable fashion, which itself is mounted, via a clothes hanger supporting rod, into the back rest of the seat or onto the head rest supports so that it may be removed easily using a single motion, then passengers may be transported in the back seat without the danger of accident, and if the fitting that remains on the back rest or head rest supports after the clothes hanger body has been removed is located below the vertical plane of the head rest, then the device will not represent a danger to an individual in the back seat, even in the event of a collision, and thus the invention will meet the set objectives in every respect.

The subject of this invention is a clothes hanging device to be used particularly for placing articles of clothing within the interior of a passenger vehicle comfortably behind the back and head rests of the seat, which device consists of a clothes hanger body where the clothes hanger body is mounted to a clothes hanger supporting rod, the lower end of the clothes hanger supporting rod is mounted into a maching fitting that the maching fitting is a pipe-like body with an open upper end, which, is built directly, in fixed fashion, into the back rest, at the middle part of the upper end of the back rest of the seat, at the part between the two head rest support rods, that connects the two head rest support rods, into which the lower end of the clothes hanger supporting rod, is inserted with a direct contact.

In another embodiment of the clothes hanger according to this invention, the matching fitting is a pipe-like body of rectangular cross-section, into which the clothes hanger supporting rod, also of rectangular cross-section, is fitted.

In another embodiment of the clothes hanging device according to this invention, a hook serving to accommodate the placement of further conventional clothes hangers is mounted to the upper end of the clothes hanger supporting rod that projects beyond the clothes hanger body.

The possible embodiments of the clothes hanging device according to this invention are described through drawings, where:
Figure 1 is a side view of the clothes hanging device according to this invention,
Figure 2 is a side view of the clothes hanging device according to this invention, with a hook-shaped making.

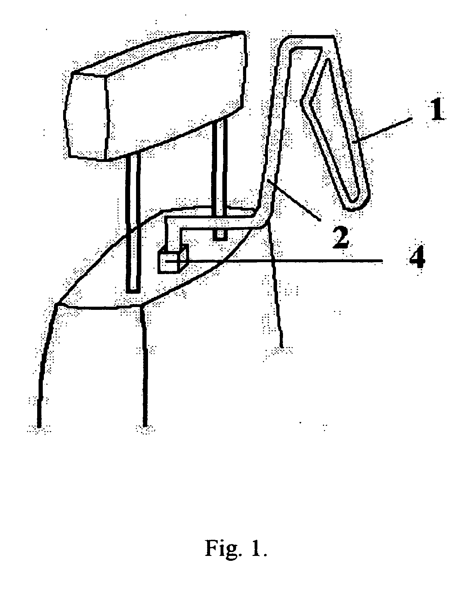

Figure 1 shows how the major parts of the clothes hanging device are positioned . Visible in this diagram are the clothes hanger body 1, consisting of a conventionally fashioned triangular element equipped with a trousers rack; the clothes hanger supporting rod 2, which is attached to the clothes hanger body 1 at approximately the two-thirds point of its length, shows the matching fitting 4, with the lower end of the clothes hanger supporting rod 2 connected such that the clothes hanger supporting rod 2 may be removed from behind the head rest with a single motion when no longer needed.

The diagram also clearly depicts the construction of the matching fitting 4 which is built directly in fixed fashion into the back rest at the middle part of the upper end of the back rest of the seat, at the part between the two head rest support rods, so that after the clothes hanger supporting rod 2 has been removed, a passenger may be transported safely in the back seat, and is in no danger of an accident even in the case of a collision.

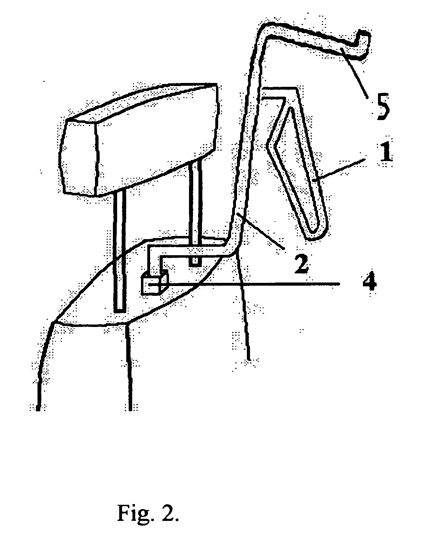

Figur 2 shows the role of the hook 5 disposed at the upper horizontal section of the clothes hanger supporting rod 2 which is attached to the clothes hanger supporting rod 2 in fixed fashion. An additional number of conventional clothes hangers may be hung on the hook 5 so that they are parallel with the clothes hanger body 1 and, as with the clothes hanger body 1, do not obstruct the driver's field of vision.
The figure is a graphic representation of a second construction of the matching fitting 4, which is mounted in fixed fashion onto the upper part of the back of the seat. The matching fitting 4 is a pipe-like structure of rectangular cross-section, into which the lower end of the clothes hanger supporting rod 2, of a smaller rectangular cross-section, is inserted so that it may be removed with a single motion when it is no longer needed and so that the matching fitting 4 remaining on the upper portion of the back rest allows for the safe transport of a passenger in the back seat. The rectangular structure of these pieces prevent the clothes hanger supporting rod 2 from rotating out of position.

I have already described the possibilities for using the clothes hanger device according to this invention in the introductory section to this specification, stating my objectives, which have been duly met, with reference to the same. The advantages afforded by the solution according to this invention are the following:
- The clothes hanging device which holds the articles of clothing to be transported is disposed within the vehicle's interior behind the head rest of the front seat so that it does not obstruct the driver's view;
- The device may be easily removed with a single motion when it is no longer needed and thus the persons travelling in the back of the vehicle are spared from any danger to their safety.
- The connecting piece, or, in another embodiment, the matching fitting remaining on the upper part of the back rest of the front seat, may be a cause for accident not even in the case of a collision, because of the manner in which it is disposed below the back vertical line of the head rest.
- The clothes hanging device is preferably made of metal or flexible plastic.

### KEY TO DIAGRAMS

- 1: clothes hanger body
- 2: clothes hanger supporting rod
- 4: matching fitting
- 5: hook

## Claims

1. A cloth hanging device used particularly for the confortable transportation of articles of clothing within the interior of a passenger vehicle behind the back and head rests of the seat, consisting of a clothes hanger body (1) which is mounted to a clothes hanger supporting rod (2), the lower end of the clothes hanger supporting rod is connected to a matching fitting (4), **characterized in that** the maching fitting (4) is a pipe-like body with an open upper end which is built directly in fixed fashion into the back rest at the middle part of the upper end of the back rest of the seat, at the part between the two head rest support rods, that connects the two head rest support rods, into which the lower end of the clothes hanger supporting rod (2), is inserted with a direct contact.

2. The clothes hanging device according to claim 1, ***whereby*** the matching fitting (4) is a pipe-like body of rectangular cross-section, into which the clothes hanger supporting rod (2), also of rectangular cross-section, is inserted.

3. The clothes hanging device according to claims 1, or 2, ***whereby*** a hook (5) to accommodate the placement of further conventional clothes hangers is mounted to the upper end of the clothes hanger supporting rod (2) that projects beyond the clothes hanger body (1).

## Patentansprüche

1. Ein Kleiderbügel, der das Ziel dient die Beförderung verschiedenartigen Kleidungen im Innenraum eines PKW bequem zu machen, hinter an der Hinterseite des Fahrersitzes bzw. hinter der Kopfstütze, einerseits aus einem Stützbügelkörper (1) besteht, der auf eine Kleiderstützstange montiert wird, wobei sich das untere Ende zu einem zusammenpassenden Zugehör anschließt (4), das sich so charakterisieren läßt, die Anschlussanpassung ein rohrförmiges Körper ist mit oben geöffnetem Ende, das auf einer befestigten Weise am mittleren Teil der Hinterseite des Fahrersitzes eingebaut wird und zwar gerade in der Mitte, zwischen den beiden Stangen des Kopstützhalters, um die beiden Stützstangen zu verbinden, wo der Kleiderbügel durch einem unmittelbaren Kontakt eingelegt werden kann. (2)

2. Gemäß Anforderung 1. des Kleiderbügels, wobei das Anpassungszugehör (4) ein rohrförmiges Körper mit rechtwinkligem Durchmesser ist, in dem die Kleidungstützstange (2) und auch der rechtwinklige Durchmesser eingesetzt wird.

3. Gemäß Anforderung 1. und 2. des Kleiderbügels, wobei ein Haken (5) wodurch weitere herkömmliche Kleiderbügel zugapasst warden können, montiert zum oberen Ende der Stützstange (2), die aus dem Kleiderbügelkörper (1) aussteht.

## Revendications

1. Un porte-manteau servant à transporter confortablement des vêtements dans un véhicule de tourisme, se fixe sur le dos de l'appui-tête des sièges, se composant d'un cintre (1) qui est monté sur une barre du porte-manteau (2), la partie inférieure de la barre est liée à une installation adéquate (4), où cette installation adéquate (4) est un élément en forme de tuyau avec une extrémité supérieure ouverte, fixée directement à l'appui-tête, au milieu de la partie supérieure de celui-ci, entre les deux barres de l'appui-tête, auxquelles la partie inférieure de la barre/baguette du cintre (2) est directement fixée.

2. Le porte-manteau, conformément à la notification 1, selon laquelle l'installation adéquate (4) est un élément en forme de tuyau avec une partie transversale rectangulaire, dans lequel est introduite la barre du cintre (2), également munie d'une partie transversale.

3. Le porte-manteau, conformément à la notification 1 ou 2, selon lesquelles un crochet (5), destiné à accrocher les cintres conformes, est monté sur l'extrémité supérieure de la barre du cintre (2) qui se situe derrière le porte-manteau (1).
